Europäisches Patentamt

European Patent Office

Office européen des brevets

(19)

(11) **EP 1 498 886 A2**

(12) **EUROPEAN PATENT APPLICATION**

(43) Date of publication:
**19.01.2005 Bulletin 2005/03**

(51) Int Cl.$^7$: **G11B 7/006**

(21) Application number: **04254269.6**

(22) Date of filing: **16.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **16.07.2003 JP 2003197514**

(71) Applicant: **Ricoh Company, Ltd.**
**Yokohama-shi, Kanagawa 222-8530 (JP)**

(72) Inventors:
- **Masakatsu, Matsui c/o Ricoh Co. Ltd.**
  **Tokyo 143-8555 (JP)**
- **Okada, Atsushi c/o Ricoh Co. Ltd.**
  **Tokyo 143-8555 (JP)**

(74) Representative: **Mounteney, Simon James**
**MARKS & CLERK,**
**57-60 Lincoln's Inn Fields**
**London WC2A 3LS (GB)**

(54) **Test recording process control method and optical disk apparatus**

(57)    In an optical disk apparatus for a rewritable optical disk including a test area including a plurality of partitions, an erase process is performed by emitting a laser light beam of a DC erase power to the test area from a laser power source before performing an OPC operation, that is, before recording test data on one of the partitions of the test area. By doing so, the variation of an optimum recording power of a laser light beam caused by an unsteady condition of the test area, such as the variation of the characteristic of recording sensitivity of the test area, can be minimized or avoided. As a result, an optimum recording power of a laser light beam can be accurately and stably determined in each OPC operation.

## FIG. 3

```
                    START
                      │
                      ▼
S1 ─┐   REWRITABLE PHASE-        NO
    └─  CHANGE TYPE OPTICAL ──────┐
          DISK ?                  │
            │ YES                 │
            ▼                     │
S2 ─┐  EMIT LASER LIGHT BEAM OF   │
    └─  DC ERASE POWER TO TEST    │
            AREA                  │
            │ ◄───────────────────┘
            ▼
S3 ─┐  DETERMINE TEST RECORDING
    └─   START POSITION OF TEST
            AREA
            │
            ▼
S4 ─┐  RECORD TEST DATA ON TEST
    └─        AREA
            │
            ▼
S5 ─┐   REPRODUCE TEST DATA
    └─
            │
            ▼
S6 ─┐   CALCULATE OPTIMUM
    └─   RECORDING POWER
            │
            ▼
S7 ─┐  RECORD DATA ON COUNT
    └─        AREA
            │
            ▼
           END
```

**Description**

BACKGROUND OF THE INVENTION

FIELD OF THE INVENTION

The present invention relates to a test recording process control method for a rewritable optical disk, such as a phase-change type optical disk, and relates to an optical disk apparatus.

DISCUSSION OF THE RELATED ART

Generally, when using a recordable or rewritable optical disk in an optical disk apparatus, a recording power calibration operation called OPC (Optimum Power Control) is performed before recording information data on an optical disk to determine an optimum recording power of a laser light beam emitted from a laser power source, such as a semi-conductor laser. The OPC operation is described, for example, in Published Japanese Patent application No. 10-64064.

Hereafter, the OPC operation is described. The recording surface of an optical disk includes a data area used for recording various types of data, and a power calibration area (PCA) which is a test recording area used for determining an optimum recording power of a laser light beam. The power calibration area includes a test area and a count area. The test area includes 100 partitions. Each of these partitions includes 15 frames. One OPC operation uses one of these partitions, and test signals are recorded on these 15 frames of the partition by variously changing each intensity value of at least two recording powers of laser light beam step by step from a minimum intensity value to a maximum intensity value (i.e., 15 intensity values). After recording the test signals on the 15 frames, the test signal in each of the 15 frames is reproduced. The recording power at which the value of the reproduced signal equals a target value is determined as an optimum recording power, and subsequent recording is carried out on the data area based on the determined optimum recording power.

When recording information data on an optical disk based on a determined optimum recording power, the recording quality of the recorded information data may become a target quality. However, if test signals are recorded on a rewritable optical disk, such as a phase-change type optical disk, the recording condition of the test signals may vary according to a condition of frames of a test area on which the test signals are recorded. For example, if the frames of the test area had been used for test recording before, the frames may have been irradiated with a laser light beam of a high power because test signals are recorded on 15 frames by variously changing each intensity value of at least two recording powers of laser light beam step by step from a minimum intensity value to a maximum intensity value in an OPC operation. If test signals are recorded (i.e., overwritten) on such frames, as compared to a case in which test signals are recorded on non-recorded frames for the first time, the recording condition of the test signals may significantly differ depending on the condition of frames, even if the test signals are recorded by use of a laser light beam of the same light-emitting power emitted from the same semi-conductor laser. In this condition, an optimum recording power determined based on a reproduced test signal varies depending on the condition of frames. As a result, an optimum recording power of a laser light beam may not be accurately determined.

Specifically, in the above-described condition, even if OPC operations are performed in the same optical disk in the same optical disk apparatus, an optimum recording power of a laser light beam determined in each OPC operation may vary. The variation of the optimum recording power of the laser light beam may cause the deterioration of the recording quality when actual information data is overwritten on a data area of a recording surface of an optical disk. Particularly, when overwriting previous information data recorded in a data area of an optical disk with new information data by use of a laser light beam of a recording power less than a recording power of a laser light beam that was used in previous recording, the recording quality of the new information data may deteriorate. Thus, in order to enhance the recording quality when overwriting an already recorded data area with new information data, it is necessary to minimize or avoid the variation of an optimum recording power of a laser light beam determined in each OPC operation.

The variation of the optimum recording power of the laser light beam may be caused by various reasons, but one of the reasons is a variation of the characteristic of recording sensitivity of a test area in a power calibration area.

Therefore, it is desirable to provide a test recording process control method and an optical disk apparatus for a rewritable optical disk, which can determine an accurate optimum recording power of a laser light beam by minimizing or avoiding the variation of an optimum recording power of a laser light beam obtained in each OPC operation.

SUMMARY OF THE INVENTION

According to an aspect of the present invention, a test recording process control method includes emitting a laser light beam of a DC erase power to a test area of a rewritable optical disk, and recording test data on the test area to determine an optimum recording power of a laser light beam.

The emitting may include emitting the laser light beam of the DC erase power to a partition of a plurality of partitions of the test area on which the test data is to be recorded.

According to another aspect of the present invention, an optical disk apparatus includes an optical pick-up including a laser power source configured to emit a laser light beam to a rewritable optical disk including a test area including a plurality of partitions, a test recording processing mechanism configured to determine an optimum recording power of the laser light beam emitted from the laser power source by recording test data on one of the partitions of the test area while changing a light-emitting power of the laser light beam emitted from the laser power source step by step and by reproducing the test data by the optical pick-up, and an erasing mechanism configured to perform an erase process by emitting a laser light beam of a DC erase power to the test area from the laser power source before the test recording processing mechanism records the test data on the one of the partitions of the test area.

The erasing mechanism may be configured to perform the erase process by emitting the laser light beam of the DC erase power to the one of the partitions of the test area where the test data is to be recorded by the test recording processing mechanism.

BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:

FIG. 1 is a block diagram of a configuration of an optical disk apparatus according to an embodiment of the present invention;
FIG. 2 is a diagram for explaining a format of a recording surface of a recordable or rewritable optical disk;
FIG. 3 is a flowchart of test recording process control operation steps of a CPU according to an embodiment of the present invention;
FIG. 4 is a flowchart of test recording process control operation steps of the CPU according to another embodiment of the present invention;
FIG. 5 is a brief flowchart of test recording process control operation steps of the CPU according to an alternative embodiment of the present invention;
FIG. 6 is a diagram for explaining a peak level and a bottom level of a reproduction signal detected by an analog signal processing circuit;
FIG. 7 is a flowchart of test recording process control operation steps of the CPU according to another embodiment of the present invention;
FIG. 8 is a flowchart of test recording process control operation steps of the CPU according to another embodiment of the present invention;
FIG. 9 is a flowchart of test recording process control operation steps of the CPU according to another embodiment of the present invention;

FIGS. 10A and 10B are flowcharts of test recording process control operation steps of the CPU according to another embodiment of the present invention; and
FIG. 11 is a flowchart of test recording process control operation steps of the CPU according to another embodiment of the present invention.

DESCRIPTION OF THE PREFERRED EMBODIMENTS

Preferred embodiments of the present invention are described in detail referring to the drawings, wherein like reference numerals designate identical or corresponding parts throughout the several views.

In the embodiments, the present invention is applied to an optical disk apparatus, such as a CD-R drive, and a CD-RW drive. The optical disk apparatus is used for an optical disk, such as a CD-ROM, a pigment-system optical disk (a recordable optical disk), such as a CD-R, and a phase-change-type optical disk (a rewritable optical disk), such as a CD-RW.

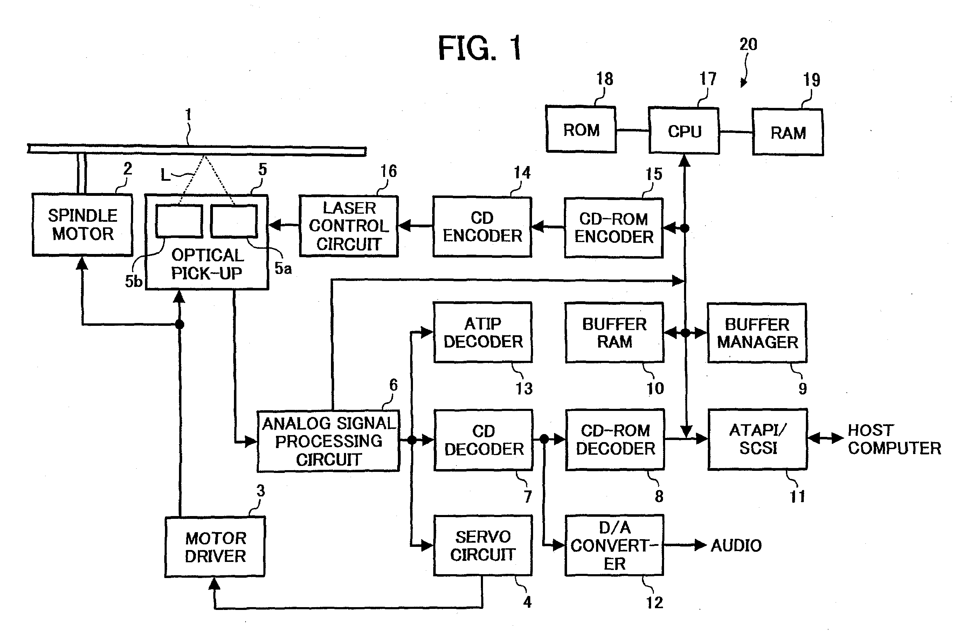

FIG. 1 is a block diagram of a configuration of an optical disk apparatus according to an embodiment of the present invention. The optical disk apparatus includes a spindle motor 2, a motor driver 3, a servo circuit 4, an optical pick-up 5, an analog signal process circuit 6, a CD decoder 7, a CD-ROM decoder 8, a buffer manager 9, a buffer RAM 10, an ATAPI/SCSI interface 11, a D/A converter 12, an ATIP decoder 13, a CD encoder 14, a CD-ROM encoder 15, a laser control circuit 16, a CPU 17, a ROM 18, a RAM 19, and a microcomputer 20.

In FIG. 1, directions indicated by arrows indicate the directions in which data flow mainly. To simplify the diagram, a detail connection relation between the CPU 17 and each block controlled by the CPU 17 is not shown in FIG. 1.

A readable control program for the CPU 17 is stored in the ROM 18. When turning on a power supply of the optical disk apparatus, the control program is loaded into a main memory (not shown). The CPU 17 controls operations in each of the blocks according to the control program, and temporarily stores data necessary for controlling the blocks in the RAM 19. The CPU 17, the ROM 18, and the RAM 19 construct the microcomputer 20.

An optical disk 1 is rotated by the spindle motor 2. The spindle motor 2 is controlled to a constant linear velocity (CLV) or to a constant angular velocity (CAV), by the motor driver 3 and the servo circuit 4. It is possible to change the linear velocity in phase. The optical pick-up 5 includes a semi-conductor laser, such as a laser diode (LD) 5a functioning as a laser power source, an optical system (not shown), a focus actuator (not shown), a track actuator (not shown), a photo detector 5b, and a position sensor (not shown). The LD 5a emits a laser light beam "L" to a recording surface of the optical disk 1.

The optical pick-up 5 is configured to be moved in a sledge direction (i.e., a radial direction of the optical disk 1) by a seek motor (not shown). The focus actuator, the track actuator, and the seek motor are controlled to locate a light spot of the laser light beam "L" at a desired position on the optical disk 1 by using the motor driver 3 and the servo circuit 4 based on signals from the photo detector 5b and the position sensor of the optical pick-up 5.

When reproducing data, a reproducing signal obtained from the optical pick-up 5 is amplified by the analog signal process circuit 6 to convert into binary data. The binary data is input to the CD decoder 7, where de-interleave and error correction are carried out. The CD decoder 7 performs an EFM (Eight to Fourteen bit Modulation) to decode the binary data into decoded data.

Decoded data is de-interleaved and error-corrected. Subsequently, the data is input to the CD-ROM decoder 8 and subjected to an additional error-correction to improve data reliability. Then, the data is stored in the buffer RAM 10 once by the buffer manager 9. If the stored data gets into sector datum, the sector datum is transferred to a host computer through the ATAPI/SCSI interface 11 in a condition as a sector datum unit. In the case of audio data, data output from the CD decoder 7 is input to the D/A converter 12 and is output as analog audio output signals.

When recording data, data is transferred from the host computer to the optical disk apparatus through the ATAPI/SCSI interface 11 and the data is stored in the buffer RAM 10 once by the buffer manager 9. A writing process is started in a condition of storing a certain level of data in the buffer RAM 10. Before writing data on the optical disk 1, the laser spot needs to be put in a write start position. This position is searched with a wobble signal grooved on the optical disk 1 as track grooves.

The wobble signal contains information on absolute time referred to as ATIP (Absolute Time In Pregroove). The information on absolute time is obtained from the ATIP decoder 13. A synchronization signal generated by the ATIP decoder 13 is input to the CD encoder 14, and this signal makes it possible to write data into an accurate position on the optical disk 1. Error-correction codes are added to the data in the buffer RAM 10, and the data is interleaved in the CD-ROM encoder 15 and the CD encoder 14, before data is written in the optical disk 1 through the laser control circuit 16 and the optical pick-up 5.

In the above-described optical disk apparatus, a recording power calibration operation called OPC (Optimum Power Control) is performed based on the control of the CPU 17 before recording information data on the optical disk 1. Specifically, test signals are recorded on a test recording area in the optical disk 1 to determine an optimum recording power of a laser light beam. Subsequent recording is carried out based on the determined optimum recording power of the laser light beam.

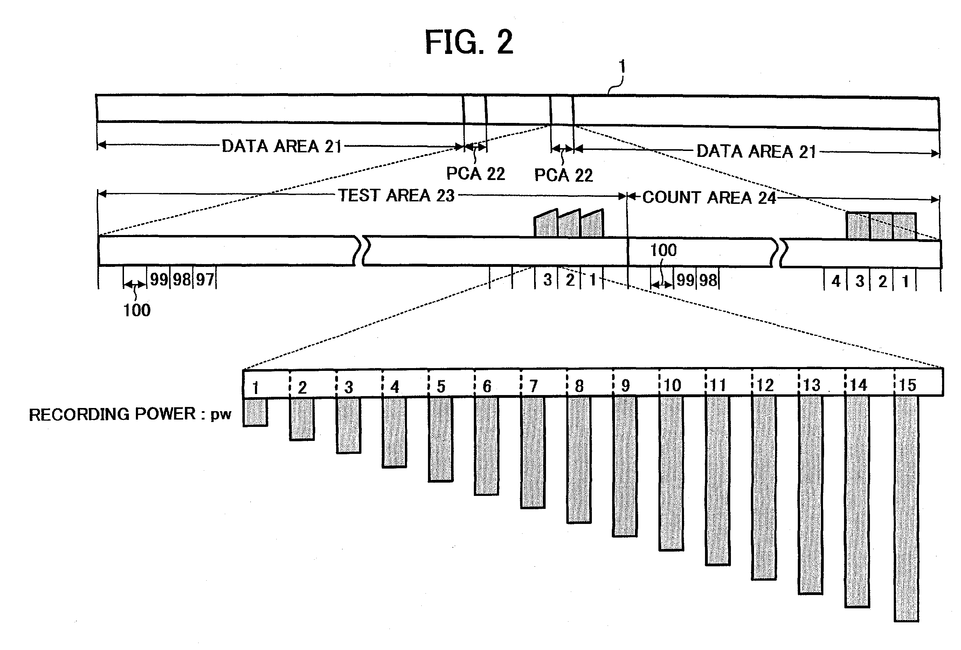

FIG. 2 is a diagram for explaining a format of a recording surface of the recordable or rewritable optical disk 1. The recording surface of the optical disk 1 includes a data area 21 used for recording various types of data, and a power calibration area (PCA) 22 where an OPC operation is performed. The PCA 22 is a test recording area used for determining an optimum recording power of a laser light beam. The PCA 22 is located on the inner radius side of the optical disk 1, and includes a test area 23 and a count area 24. The test area 23 includes 100 partitions. Each of these partitions includes 15 frames. One OPC operation uses one of the 100 partitions, and test signals are recorded on the 15 frames of the partition by various changing each intensity value of at least two recording powers (pw) of laser light beam step by step from a minimum intensity value to a maximum intensity value (i.e., 15 intensity values). After recording the test signals on the 15 frames, the test signal in each of the 15 frames is reproduced. A characteristic value β of the reproduced signal is compared with a target value. Then, the recording power at which the characteristic value β of the reproduced signal equals the target value is determined as an optimum recording power. The count area 24 includes 100 partitions. Each of these partitions includes 1 frame. The partition in the count area 24 corresponds to the partition in the test area 23. When the partition in the test area 23 is used, data is recorded in the corresponding partition in the count area 24 and is used for searching a test recording start position of the test area 23.

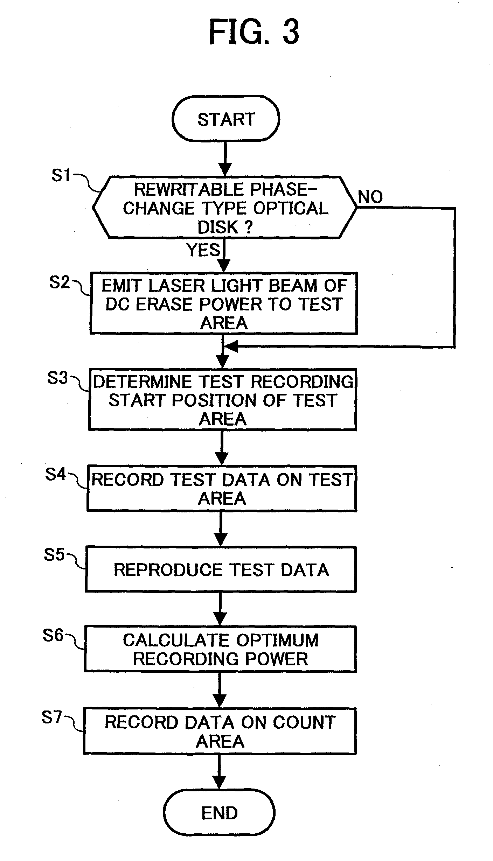

FIG. 3 is a flowchart of test recording process control operation steps of the CPU 17 according to an embodiment of the present invention. The test recording process control operation starts when the CPU 17 outputs the instruction for starting an OPC operation. First, the CPU 17 determines if the optical disk 1 is a rewritable phase-change-type optical disk in step S1. The CPU 17 determines a type of the optical disk 1 in step S1, for example, by reading disk construction data in a lead-in area located at an inner most portion of the optical disk 1. If the optical disk 1 is a rewritable phase-change-type optical disk (i.e., the answer is YES in step S1), the CPU 17 performs an erase process by emitting a laser light beam of a DC erase power from the LD 5a to the test area 23 of the PCA 22 before performing an OPC operation in step S2. In step S2, the CPU 17 functions as an erasing mechanism configured to perform the erase process. If the optical disk 1 is not a rewritable phase-change-type optical disk (i.e., the answer is NO in step S1), the test recording process control operation proceeds to step S3.

Subsequently, the CPU 17 determines a test recording start position of the test area 23 where the OPC operation is to be performed by counting the count area 24 in step S3. Then, the CPU 17 performs a test recording operation (i.e., an OPC operation) by recording test data on a predetermined partition of the test area 23 while variously changing each intensity value of at least two recording powers of laser light beam emitted from the LD 5a step by step in step S4. Subsequently, the CPU 17 obtains a characteristic value of a reproduction signal by reproducing the test data by the optical pick-up 5 in step S5. Then, the CPU 17 calculates an optimum recording power of a laser light beam based on the obtained characteristic value in step S6. In steps S4 through S6, the CPU 17 functions as a test recording processing mechanism configured to determine an optimum recording power of a laser light beam emitted from the LD 5a.

Subsequently, the CPU 17 records data on the count area 24 in step S7. The data recorded on the count area 24 indicates that the partition of the test area 23 which corresponds to the partition of the count area 24, is used for test recording operation. Then, the test recording process control operation ends.

In the above-described test recording process control operation according to the embodiment of the present invention, an erase process is performed by emitting a laser light beam of a DC erase power to the test area 23 of the PCA 22 from the LD 5a before performing an OPC operation, that is, before recording test data on one of the partitions of the test area 23. The term "DC erase power" here means an erase power of a laser light beam which is emitted continuously to the test area 23 of the PCA 22 at a constant power intensity during a predetermined period. The DC erase power is preferably higher than an erase power used in a regular erasing operation. By doing so, the variation of an optimum recording power of a laser light beam caused by the unsteady condition of the test area 23, such as the variation of the characteristic of recording sensitivity of the test area 23, can be minimized or avoided. As a result, an optimum recording power of a laser light beam can be accurately and stably determined in each OPC operation.

When erasing information data recorded in a phase-change-type optical disk, it is generally known that it is preferable to erase information data by using a laser light beam of a high erase power rather than a low erase power. Further, when recording test data on the test area 23 of the PCA 22, it is generally performed such that the test data is recorded by variously changing each intensity value of at least two recording powers of laser light beam step by step from a low power intensity lower than a regular recording power intensity to a high power intensity higher than the regular recording power intensity. In this condition, even if the test data recorded on the test area 23 is erased by using a laser light beam of an erase power that is used in a regular erasing operation for erasing actual data recorded on the data area 21, the test data may not be properly erased. For this reason, in the above-described erase process performed in the step S2 of the test recording process control operation, a laser light beam of a DC erase power higher than an erase power of a laser light beam emitted to the data area 21, is emitted to the test area 23 of the PCA 22. By doing so, the test data recorded on the test area 23 by using a laser light beam of a high recording power can be surely erased, and the condition of the test area 23 before performing the test recording operation can be uniformed. As a result, the variation of an optimum recording power of a laser light beam caused by the unsteady condition of the test area 23 can be minimized or avoided, so that an optimum recording power of a laser light beam can be accurately and stably determined in each OPC operation. This erase process emitting a laser light beam of a high DC erase power is similarly performed in the embodiments described below.

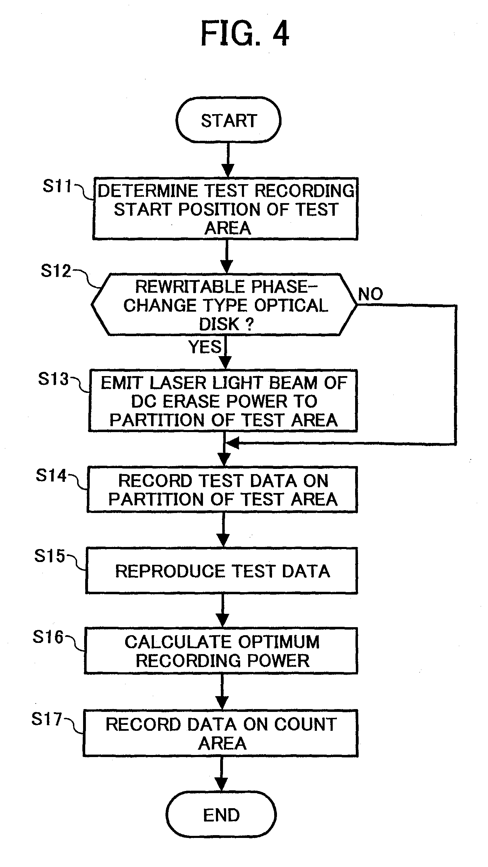

Next, test recording process control operation steps of the CPU 17 according to another embodiment of the present invention will be described referring to FIGS. 4 through 6. In this embodiment, the erase process is performed only in a predetermined partition of the test area 23 where an OPC operation is to be performed, not in the entire test area 23 before performing an OPC operation. After the CPU 17 outputs the instruction for starting an OPC operation, the CPU 17 determines a test recording start position of the test area 23 where the OPC operation is to be performed by counting the count area 24 in step S11. Subsequently, the CPU 17 determines if the optical disk 1 is a rewritable phase-change-type optical disk in step S12. If the optical disk 1 is a rewritable phase-change-type optical disk (i.e., the answer is YES in step S12), the CPU 17 performs an erase process by emitting a laser light beam of a DC erase power from the LD 5a to a predetermined partition of the test area 23 of the PCA 22 before performing the OPC operation in step S13. In step S13, the CPU 17 functions as an erasing mechanism configured to perform the erase process. If the optical disk 1 is not a rewritable phase-change-type optical disk (i.e., the answer is NO in step S12), the test recording process control operation proceeds to step S14.

Then, the CPU 17 performs a test recording operation (i.e., an OPC operation) by recording test data on the predetermined partition of the test area 23 while variously changing each intensity value of at least two recording powers of laser light beam emitted from the LD 5a step by step in step S14. Subsequently, the CPU 17 obtains a characteristic value of a reproduction signal by reproducing the test data by the optical pick-up 5 in step S15. Then, the CPU 17 calculates an optimum recording power of a laser light beam based on the obtained characteristic value in step S16. In steps S14 through S16, the CPU 17 functions as a test recording processing mechanism configured to determine an optimum recording power of a laser light beam emitted from the LD 5a.

Subsequently, the CPU 17 records data in the count area 24 in step S17. The data recorded on the count area 24 indicates that the partition of the test area 23 which corresponds to the partition of the count area 24, is used for test recording operation. Then, the test recording process control operation ends.

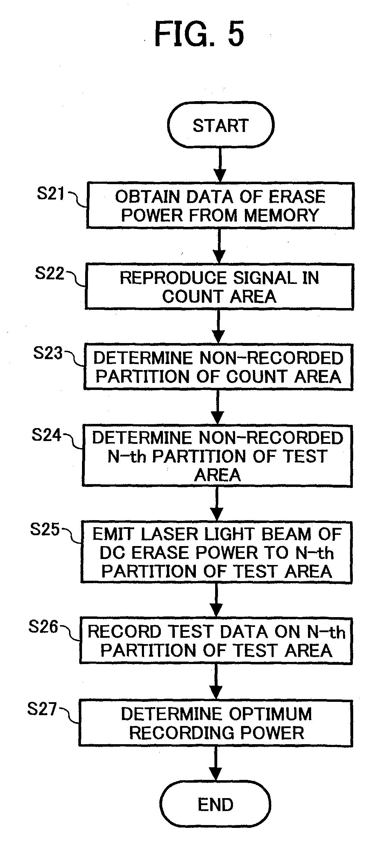

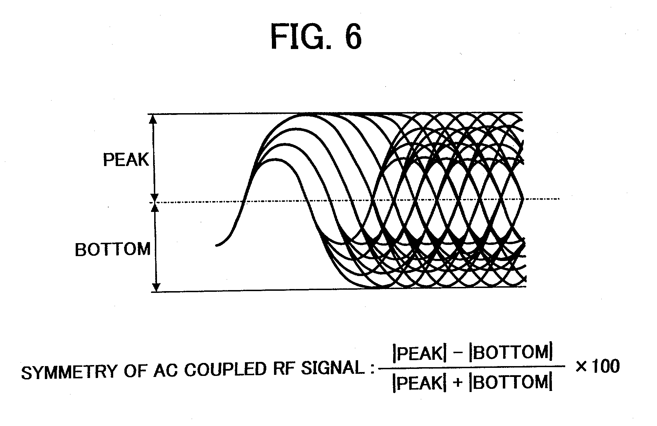

The above-described test recording process control operation steps S11 through S17 may be alternatively shown as in a brief flowchart of FIG. 5. First, the data of erase power corresponding to the type of the optical disk 1 and the recording speed for performing an OPC operation stored in a memory, such as the RAM 19, is obtained in step S21. The type of the optical disk 1 is, such as a CD-RW disk, DVD-RW disk, or DVD+RW disk. Then, the signal in the count area 24 is reproduced by emitting a laser light beam from the LD 5a to the count area 24, and the reproduction signal is detected by the analog signal processing circuit 6 in step S22. Subsequently, the CPU 17 determines if the partitions of the count area 24 are recorded or non-recorded based on a difference between a peak level and a bottom level of the reproduction signal in step S23. FIG. 6 is a diagram for explaining a peak level and a bottom level of the reproduction signal detected by the analog signal processing circuit 6. The following expression indicates a symmetry of AC coupled RF signal,

$$\{(|PEAK| - |BOTTOM|) / (|PEAK| + |BOTTOM|)\} \times 100$$

where "PEAK" is a peak level of the reproduction signal and "BOTTOM" is a bottom level of the reproduction signal.

Next, the CPU 17 determines a non-recorded partition of the test area 23 (for example, the N-th partition) corresponding to the partition of the count area 24 which was determined as a non-recorded partition in step S24. The non-recorded N-th partition of the test area 23 determined by the CPU 17 in step S24 is used for performing an OPC operation. Subsequently, the CPU 17 performs an erase process by emitting a laser light beam of a predetermined DC erase power from the LD 5a to the N-th partition of the test area 23 in step S25. In step S25, the predetermined DC erase power is set to be higher than the erase power, the data of which is obtained from the memory in step S21. Then, the CPU 17 performs a test recording operation (i.e., an OPC operation) by recording test data on the N-th partition of the test area 23 while variously changing each intensity value of at least two recording powers of laser light beam emitted from the LD 5a step by step in step S26. Subsequently, the CPU 17 measures the amplitude of a reproduction signal of the test data, and determines a recording power which provides an optimum recording quality based on the amplitude of the reproduction signal of the test data in step S27.

In the above-described test recording process control operation according to the alternative embodiment of the present invention, the erase process is performed only in a predetermined partition of the test area 23 on which test data is to be recorded, not in all the partitions of the test area 23. By doing so, the redundant time consumed in performing the erase process can be efficiently cut.

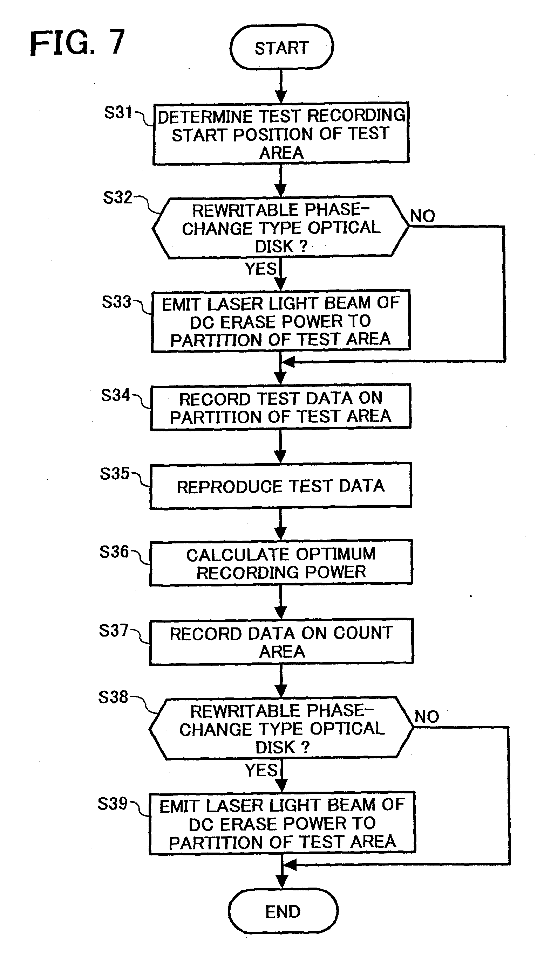

FIG. 7 is a flowchart of test recording process control operation steps of the CPU 17 according to another embodiment of the present invention. This embodiment can be applied to any of the above-described test recording process control operation in the flowcharts of FIGS. 3 and 4. As a non-limiting example, the test recording process control operation of the present embodiment is applied to the test recording process control operation in FIG. 4. The test recording process control operation steps S31 through S37 in FIG. 7 are similar to the test recording process control operation steps S11 through S17 in FIG. 4. Therefore, their descriptions are omitted here.

After the CPU 17 records data on the count area 24 in step S37, the CPU 17 determines if the optical disk 1 is a rewritable phase-change-type optical disk in step S38. If the optical disk 1 is a rewritable phase-change-type optical disk (i.e., the answer is YES in step S38), the CPU 17 performs another erase process by emitting a laser light beam of a DC erase power from the LD 5a to the partition of the test area 23 on which the test data is recorded in step S39. Then, the test recording process control operation ends.

In this embodiment, after the OPC operation is completed (i.e., after the optimum recording power is determined), the partition of the test area 23 on which the test data was recorded in the OPC operation is subjected to the erase process again. By doing so, the test data in the partition of the test area 23 can be erased by emitting a laser light beam of a high erase power to the partition. Thus, the variation of an optimum recording power of a laser light beam that may occur in a subsequent OPC operation performed in the same partition of the test area 23 can be minimized or avoided. As a result, a test recording quality in the OPC operation is enhanced, and thereby an optimum recording power of a laser light beam can be accurately determined.

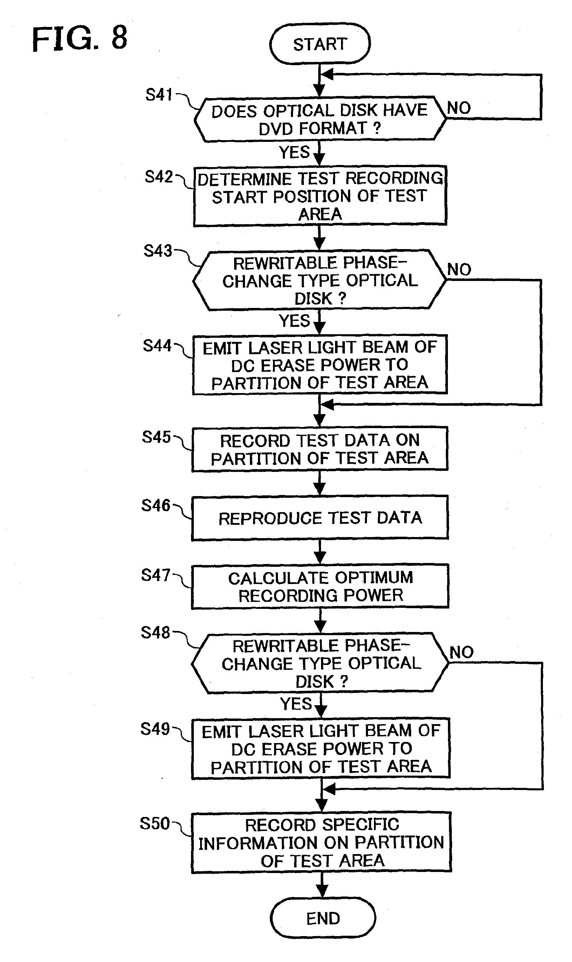

FIG. 8 is a flowchart of test recording process control operation steps of the CPU 17 according to another embodiment of the present invention. In this embodiment, the optical disk 1 has a DVD format. In this case, the optical disk apparatus of FIG. 1 may include an alternative configuration adapted to a DVD-R disk and DVD-RW disk.

The test recording process control operation starts when the CPU 17 outputs the instruction for starting an OPC operation. First, the CPU 17 determines if the optical disk 1 has a DVD format based on the information in the lead-in area of the optical disk 1 in step S41. If the optical disk 1 has a DVD format (i.e., the answer is YES in step S41), the CPU 17 selects a partition of the count area 24 at random, and determines a test recording start position of a partition of the test area 23 corresponding to the selected partition of the count area 24 for performing an OPC operation in step S42. Next, the CPU 17 determines if the optical disk 1 is a rewritable phase-change-type optical disk in step S43. If the optical disk 1 is a rewritable phase-change-type optical disk (i. e., the answer is YES in step S43), the CPU 17 performs an erase process by emitting a laser light beam of a DC erase power from the LD 5a to the partition of the test area 23 before performing an OPC operation in step S44. In step S44, the CPU 17 functions as an erasing mechanism configured to perform the erase process. If the optical disk 1 is not a rewritable phase-change-type optical disk (i.e., the answer is NO in step S43), the test recording process control operation proceeds to step S45.

Subsequently, the CPU 17 performs a test recording operation (i.e., an OPC operation) by recording test data on the partition of the test area 23 while variously changing each intensity value of at least two recording powers of laser light beam emitted from the LD 5a step by step in step S45. Subsequently, the CPU 17 obtains a characteristic value of a reproduction signal by reproducing the test data by the optical pick-up 5 in step S46. Then, the CPU 17 calculates an optimum recording power of a laser light beam based on the obtained characteristic value in step S47. In steps S45 through S47, the CPU 17 functions as a test recording processing mechanism configured to determine an optimum recording power of a laser light beam emitted from the LD 5a.

Subsequently, the CPU 17 determines again if the optical disk 1 is a rewritable phase-change-type optical disk in step S48. If the optical disk 1 is a rewritable phase-change-type optical disk (i.e., the answer is YES in step S48), the CPU 17 performs another erase process by emitting a laser light beam of a DC erase power from the LD 5a to the partition of the test area 23 on which the test data is recorded in step S49. Further, the CPU 17 records a pattern including specific information as the predetermined main data necessary for the DVD format on the partition of the test area 23 where another erase process has been performed in step S50. In step S50, the CPU 17 functions as a specific information recording mechanism configured to record a pattern including specific information on one of the partitions of the test area 23 of the optical disk 1 of a DVD format which is subjected to the another erase process. Then, the test recording process control operation ends.

In the case of using the optical disk 1 of a DVD format, specific information needs to be recorded on the test area 23 of the PCA 22 after an optimum recording power of a laser light beam is determined. In this embodiment, before recording such specific information on the partition of the test area 23 on which the test data is recorded, the partition of the test area 23 is subjected to the another erase process. Thus, all the test data remaining on the partition of the test area 23 is erased. Therefore, even if the test data is recorded on the partition of the test area 23 by using a laser light beam of a high recording power in the OPC operation, the specific information can be accurately recorded on the partition of the test area 23.

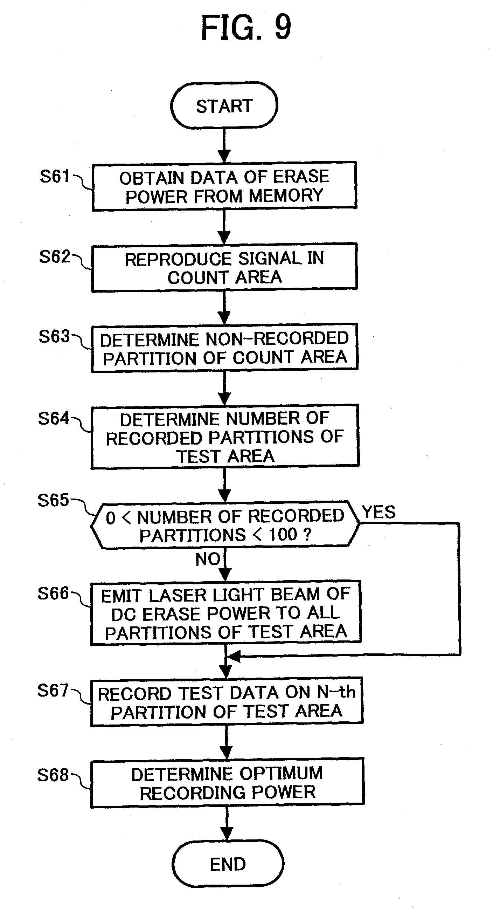

FIG. 9 is a flowchart of test recording process control operation steps of the CPU 17 according to another embodiment of the present invention. In this embodiment, all the partitions of the test area 23 of the PCA 22 are subjected to an erase process when necessary.

First, the data of erase power corresponding to the type of the optical disk 1 and the recording speed for performing an OPC operation stored in a memory, such as the RAM 19, is obtained in step S61. The type of the optical disk 1 is, such as a CD-RW disk, DVD-RW disk, or DVD+RW disk. Then, the signal in the count area 24 is reproduced by emitting a laser light beam from the LD 5a to the count area 24, and the reproduction signal is detected by the analog signal processing circuit 6 in step S62. Subsequently, the CPU 17 determines if the partitions of the count area 24 are recorded or non-recorded based on a difference between a peak level and a bottom level of the reproduction signal in step S63. Then, the CPU 17 determines the number of the recorded partitions of the test area 23 on which test data is recorded based on the recorded partitions of the count area 24 in step S64. Further, the CPU 17 determines if the number of the recorded partitions of the test area 23 is greater than 0 (nil) and less than 100 (full) in step S65. In step S65, the CPU 17 functions as a number determining mechanism configured to determine the number of the partitions of the test area 23 on which the test data is recorded. If the number of the recorded partitions of the test area 23 is 0 (nil) or 100 (full) in step S65 (i.e., the answer is NO in step S65), the CPU 17 performs an erase process by emitting a laser light beam of a predetermined DC erase power from the LD 5a to all the partitions of the test area 23 before performing an OPC operation in step S66. In step S66, the predetermined DC erase power is set to be higher than the erase power, the data of which is obtained from the memory in step S61, and the CPU 17 functions as an erasing mechanism configured to perform an erase process. If the number of the recorded partitions of the test area 23 is greater than 0 and less than 100 in step S65 (i.e., the answer is YES in step S65), the test recording process control operation proceeds to step S67.

In step S67, the CPU 17 performs a test recording operation (i.e., an OPC operation) by recording test data, for example, on the N-th partition of the test area 23 while variously changing each intensity value of at least two recording powers of laser light beam emitted from the LD 5a step by step. Subsequently, the CPU 17 measures the amplitude of the reproduction signal of the test data, and determines a recording power which provides an optimum recording quality based on the amplitude of the reproduction signal of the test data in step S68. In steps S67 and S68, the CPU 17 functions as a test recording processing mechanism configured to determine an optimum recording power of a laser light beam emitted from the LD 5a.

When performing an erase process only in a predetermined partition of the test area 23 on which test data is to be recorded, an operation for moving the optical pick-up 5 including the LD 5a to the predetermined partition of the test area 23 and an operation for performing an erase process in the predetermined partition of the test area 23 need to be executed every time a test recording operation (i.e., an OPC operation) is performed. Such operations increase a time necessary for performing a test recording process control operation. However, in the present embodiment, an erase process is performed only when all the partitions of the test area 23 are non-recorded or recorded. Specifically, the first erase process is performed in all the partitions of the test area 23 at one time when all the partitions are non-recorded (i.e., when the number of the recorded partitions is 0). Further, a subsequent erase process is performed in all the partitions of the test area 23 at one time when all the partitions are recorded (i.e., when the number of the recorded partitions is 100). Therefore, in the case of performing OPC operations several times in an optical disk, once the erase process is performed in all the partitions of the test area 23 at one time before performing the first OPC operation, the erase process need not be performed until all the partitions of the test area 23 are recorded with test data. Because the erase process is not performed every time an OPC operation is performed, a time necessary for performing a test recording process control operation can be decreased in the second test recording process control operation and after.

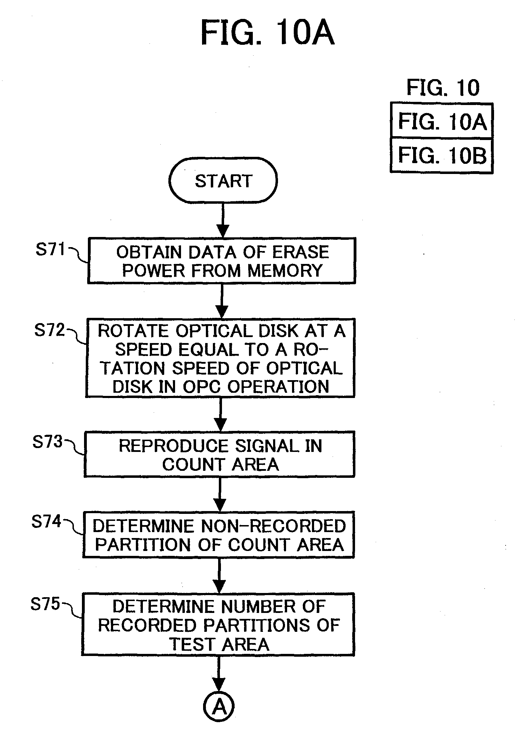

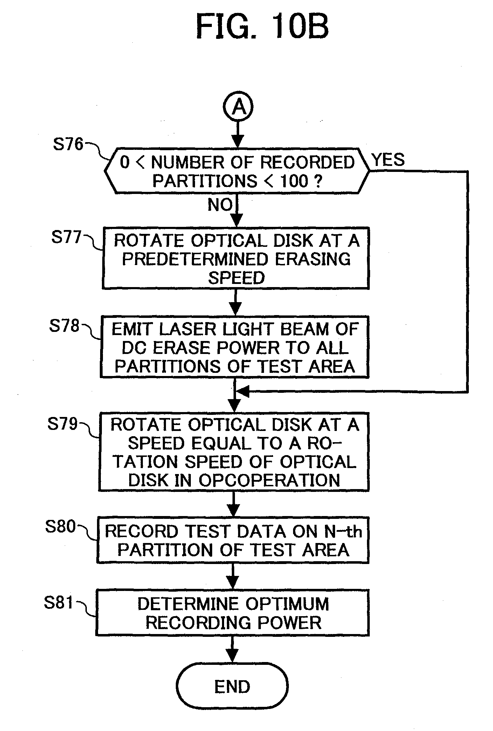

FIGS. 10A and 10B are flowcharts of test recording process control operation steps of the CPU 17 according to. another embodiment of the present invention. This embodiment is similar to the embodiment described in the flowchart of FIG. 9 except for the rotation speed of the optical disk 1 in the test recording process control operation.

First, the data of erase power corresponding to the type of the optical disk 1 and an erasing speed when erasing actual data recorded on the data area 21 in a regular erasing operation stored in a memory, such as the RAM 19, is obtained in step S71. The type of the optical disk 1 is, such as a CD-RW disk, DVD-RW disk, or DVD+RW disk. Then, the CPU 17 causes the optical disk 1 to rotate at a speed equal to a rotation speed of the optical disk 1 in an OPC operation in step S72. Then, the signal in the count area 24 is reproduced by emitting a laser light beam from the LD 5a to the count area 24, and the reproduction signal is detected by the analog signal processing circuit 6 in step S73. Subsequently, the CPU 17 determines if the partitions of the count area 24 are recorded or non-recorded based on a difference between a peak level and a bottom level of the reproduction signal in step S74. Then, the CPU 17 determines the number of the recorded partitions of the test area 23 on which test data is recorded based on the recorded partitions of the count area 24 in step S75.

Further, the CPU 17 determines if the number of the recorded partitions of the test area 23 is greater than 0 (nil) and less than 100 (full) in step S76. If the number of the recorded partitions of the test area 23 is 0 (nil) or 100 (full) in step S76 (i.e., the answer is NO in step S76), the CPU 17 causes the optical disk 1 to rotate at a predetermined erasing speed in step S77, and performs an erase process by emitting a laser light beam of a predetermined DC erase power from the LD 5a to all the partitions of the test area 23 before performing an OPC operation in step S78. In step S77, the predetermined erasing speed may be set to be lower than the erasing speed when erasing actual data recorded on the data area 21 in a regular erasing operation. Further, in step S78, the predetermined DC erase power is set to be higher than the erase power, the data of which is obtained from the memory in step S71. By setting so, all the test data remaining on the partitions of the test area 23 can be surely erased, so that the condition of the test area 23 before performing the test recording operation can be uniformed.

If the number of the recorded partitions of the test area 23 is greater than 0 and less than 100 in step S76 (i.e., the answer is YES in step S76), the test recording process control operation proceeds to step S79. In step S79, the CPU 17 causes the optical disk 1 to rotate at a speed equal to a rotation speed of the optical disk 1 in the OPC operation. Then, the CPU 17 performs a test recording operation (i.e., an OPC operation) by recording test data, for example, on the Nth partition of the test area 23 while variously changing each intensity value of at least two recording powers of laser light beam emitted from the LD 5a step by step in step S80. Subsequently, the CPU 17 measures the amplitude of the reproduction signal of the test data, and determines a recording power which provides an optimum recording quality based on the amplitude of the reproduction signal of the test data in step S81.

In the above-described test recording process control operation in FIGS. 10A and 10B, the CPU 17 may cause the optical disk 1 to rotate at a predetermined erasing speed in step S72 instead of step S77, that is, before reproducing the signal in the count area 24 in step S73. In this case, the CPU 17 does not cause the optical disk 1 to rotate at a speed equal to a rotation speed of the optical disk 1 in an OPC operation in step S72. The erasing speed of the optical disk 1 is not limited to a particular value, but it is preferable to select the speed that allows an adequate erasing performance.

In the above-described embodiment, the optical disk 1 is rotated at the same erasing speed every time the CPU 17 performs the erase process before performing the OPC operation. If the rotation speed of the optical disk 1 changes every time the CPU 17 performs the erase process, an adequate value of a DC erase power of a laser light beam emitted in the erase process becomes different. This causes the condition of the test area 23 to become different in each erase process, thereby causing the variation of the optimum recording power determined in the OPC operation. However, in the above-described embodiment, because the erase processes are performed while rotating the optical disk 1 at the same speed, the condition of the test area 23 subjected to the erase process can be uniform. Thus, the variation of the optimum recording power determined in the OPC operation can be minimized or avoided.

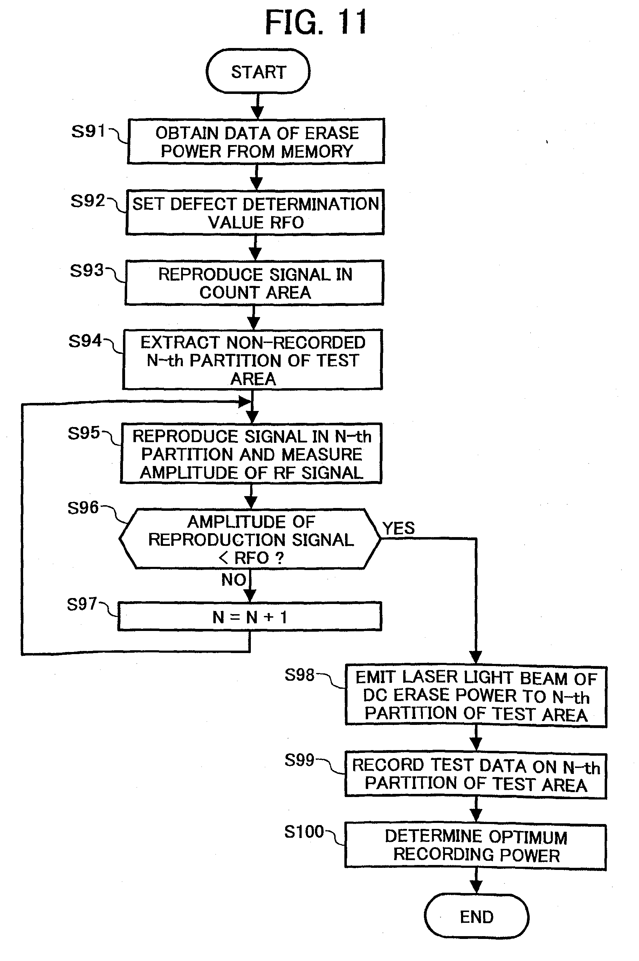

FIG. 11 is a flowchart of test recording process control operation steps of the CPU 17 according to another embodiment of the present invention.

If test recording is performed in the partition of the test area 23 that has a defect, such as blemish, or scratch, an optimum recording power may not be adequately determined in an OPC operation. Therefore, in this embodiment, the CPU 17 also functions as a defect determining mechanism configured to determine if the partition of the test area 23 has a defect. If the partition (even if a non-recorded partition) of the test area 23 has a defect, an amplitude obtained from the peak level and bottom level of a reproduction signal exceeds an amplitude of a reproduction signal obtained from a recorded partition of the test area 23 without a defect. Thus, the amplitude of the reproduction signal obtained from the recorded partition of the test area 23 may be used as a defect determination value (i.e., a threshold value), and the CPU 17 determines if the partition of the test area 23 has a defect by comparing an amplitude of a reproduction signal obtained from the partition of the test area 23 with the defect determination value.

First, the data of erase power corresponding to the type of the optical disk 1 and the recording speed for performing an OPC operation stored in a memory, such as the RAM 19, is obtained in step S91. Then, the CPU 17 sets a defect determination value RFO (i.e., a threshold value) used for determining if the optical disk 1 has a defect in step S92. Then, the signal in the count area 24 is reproduced by emitting a laser light beam from the LD 5a to the count area 24, and the reproduction signal is detected by the analog signal processing circuit 6 in step S93. Next, the CPU 17 extracts the partition of the test area 23 (for example, the N-th partition) corresponding to the partition of the count area 24 which was determined as a non-recorded partition in step S94. The non-recorded N-th partition of the test area 23 extracted by the CPU 17 in step S94 is used for performing an OPC operation. In step S94, the CPU 17 functions as an extracting mechanism configured to extract a non-recorded partition of the test area 23.

Subsequently, the signal in the N-th partition is reproduced, and an amplitude of the reproduction signal (i.e., an RF signal) is measured in step S95. Then, the CPU 17 determines if the amplitude of the reproduction signal falls below the defect determination value RFO in step 96. In step S96, the CPU 17 functions as a defect determining mechanism configured to determine if the non-recorded partition extracted in step S94 has a defect. If the amplitude of the reproduction signal is equal to or greater than the defect determination value RFO in step 96 (i.e., the answer is NO in step S96), the CPU 17 increments the number "N" by 1 in step S97. After the step S97, the test recording process control operation returns to reexecute step S95. In step S95, the signal in the N-th partition (the current "N" is greater than the preceding "N" by 1) is reproduced, and an amplitude of the reproduction signal (i.e., an RF signal) is measured in step S95. The measurement of the amplitude of the reproduction signal is repeated until the amplitude of the signal reproduced from the N-th partition falls below the defect determination value RFO.

If the amplitude of the signal reproduced from the N-th partition falls below the defect determination value RFO in step 96 (i.e., the answer is YES in step S96), the N-th partition is determined as a partition without a defect, and is used for performing an OPC operation. Subsequently, the CPU 17 performs an erase process by emitting a laser light beam of a predetermined DC erase power from the LD 5a to the N-th partition of the test area 23 in step S98. In step S98, the predetermined DC erase power is set to be higher than the erase power, the data of which is obtained from the memory in step S91, and the CPU 17 functions as an erasing mechanism configured to perform an erase process.

Then, the CPU 17 performs a test recording operation (i.e., an OPC operation) by recording test data on the N-th partition of the test area 23 while variously changing each intensity value of at least two recording powers of laser light beam emitted from the LD 5a step by step in step S99. Subsequently, the CPU 17 measures the amplitude of the reproduction signal of the test data, and determines a recording power which provides an optimum recording quality based on the amplitude of the reproduction signal of the test data in step S100. In steps S99 and S100, the CPU 17 functions as a test recording processing mechanism configured to determine an optimum recording power of a laser light beam emitted from the LD 5a.

In the above-described embodiment of the present invention, the erase process and test recording operation are performed only in the partition of the test area 23 without a defect. By doing so, an optimum recording power can be determined with accuracy, so that a recording quality can be enhanced.

In the above-described test recording process control operations according to the embodiments of the present invention, an erase process is performed by emitting a laser light beam of a DC erase power to the test area 23 of the PCA 22 from the LD 5a before performing an OPC operation, that is, before recording test data on one of the partitions of the test area 23. By doing so, the variation of an optimum recording power of a laser light beam caused by the unsteady condition of the test area 23, such as the variation of the characteristic of recording sensitivity of the test area 23, can be minimized or avoided. As a result, an optimum recording power of a laser light beam can be accurately and stably determined in each OPC operation.

The present invention has been described with respect to the exemplary embodiments illustrated in the figures. However, the present invention is not limited to these embodiments and may be practiced otherwise.

Numerous additional modifications and variations of the present invention are possible in light of the above teachings. It is therefore understood that within the scope of the appended claims, the present invention may be practiced other than as specifically described herein.

## Claims

1.   A test recording process control method, comprising:

   emitting a laser light beam of a DC erase power to a test area (23) of a rewritable optical disk (1); and
   recording test data on the test area (23) to determine an optimum recording power of a laser light beam.

2.   A method according to claim 1, wherein the emitting comprises emitting the laser light beam of the DC erase power to a partition of a plurality of partitions of the test area (23) on which the test data is to be recorded.

3.   A method according to claim 1, further comprising, determining a number of partitions of the test area (23) on which the test data is recorded, wherein the emitting comprises emitting the laser light beam of the DC erase power to all the partitions of the test area (23) when the determined number of the partitions of the test area (23) on which the test data is recorded is one of nil and full.

4.   A method according to claim 3, wherein the emitting comprises emitting the laser light beam of the DC erase power to all the partitions of the test area (23) while rotating the rewritable optical disk (1) at a same speed every time the laser light beam is emitted to all the partitions.

5.   A method according to claim 1, further comprising:

   extracting a non-recorded partition of a plurality of partitions of the test area (23);
   performing a reproduction process in the extracted non-recorded partition; and
   determining if the extracted non-recorded partition has a defect by comparing an amplitude of a reproduction signal obtained from the extracted non-recorded partition with a threshold value,

   wherein the emitting comprises emitting the laser light beam of the DC erase power to the extracted non-recorded partition determined as having no defect.

6.   A method according to one of claims 1 to 5, wherein the emitting comprises emitting the laser light beam of the DC erase power higher than an erase power of a laser light beam emitted to a data area (21) of the rewritable optical disk (1) on which actual data is recorded.

7.   A method according to one of claims 2 to 6, wherein the recording further comprises recording the test data on the partition of the plurality of partitions of the test area (23) while changing a light-emitting power of a laser light beam step by step, and wherein the method further comprises:

   determining the optimum recording power of the laser light beam by reproducing the recorded test data from the partition of the plurality of partitions of the test area (23); and
   emitting a laser light beam of a DC erase power to the partition of the plurality of partitions of the test area (23) from which the test data is reproduced.

8.   A method according to claim 7, wherein the rewritable optical disk (1) includes an optical disk (1) of a DVD format, and wherein the method further comprises, recording a pattern including specific information on the partition of the plurality of partitions of the test area (23) of the optical disk (1) of the DVD format to which the laser light beam of the DC erase power is emitted after the optimum recording power of the laser light beam is determined.

9.   An optical disk apparatus, comprising:

   an optical pick-up (5) including a laser power source (5a) configured to emit a laser light beam to a rewritable optical disk (1) including a test area (23) including a plurality of partitions;
   a test recording processing mechanism (17) configured to determine an optimum recording power of the laser light beam emitted from the laser power source (5a) by recording test data on one of the partitions of the test area (23) while changing a light-emitting power of the laser light beam emitted from the laser power source (5a) step by step and by reproducing the test data by the optical pick-up (5); and
   an erasing mechanism configured to perform an erase process by emitting a laser light beam of a DC erase power to the test area (23) from the laser power source (5a) before the test recording processing mechanism (17) records the test data on the one of the partitions of the test area (23).

**10.** An optical disk apparatus according to claim 9, wherein the erasing mechanism (17) is configured to perform the erase process by emitting the laser light beam of the DC erase power to the one of the partitions of the test area (23) where the test data is to be recorded by the test recording processing mechanism (17).

**11.** An optical disk apparatus according to claim 9, further comprising,

a number determining mechanism (17) configured to determine a number of the partitions of the test area (23) on which the test data is recorded,

wherein the erasing mechanism (17) is configured to perform the erase process by emitting the laser light beam of the DC erase power to all the partitions of the test area (23) when the number determining mechanism (17) determines that the number of the partitions of the test area (23) on which the test data is recorded is one of nil and full.

**12.** An optical disk apparatus according to claim 11, wherein the erasing mechanism (17) is configured to perform the erase process by emitting the laser light beam of the DC erase power to all the partitions of the test area (23) while rotating the rewritable optical disk (1) at a same speed every time the erasing mechanism (17) emits the laser light beam to all the partitions.

**13.** An optical disk apparatus according to claim 9, further comprising:

an extracting mechanism (17) configured to extract a non-recorded partition of the partitions of the test area (23); and
a defect determining mechanism (17) configured to determine if the non-recorded partition extracted by the extracting mechanism (17) has a defect by comparing an amplitude of a reproduction signal obtained from the extracted non-recorded partition with a threshold value,

wherein the erasing mechanism (17) is configured to perform the erase process by emitting the laser light beam of the DC erase power to the extracted non-recorded partition determined by the defect determining mechanism (17) as having no defect.

**14.** An optical disk apparatus according to one of claims 9 to 13, wherein the erasing mechanism (17) is configured to perform the erase process by emitting the laser light beam of the DC erase power higher than an erase power of a laser light beam emitted to a data area (21) of the rewritable optical disk (1) on which actual data is recorded.

**15.** An optical disk apparatus according to one of claims 9 to 14,

wherein the test recording processing mechanism (17) is configured to determine the optimum recording power of the laser light beam emitted from the laser power source (5a) by recording test data on the one of the partitions of the test area (23) which is subjected to the erase process performed by the erasing mechanism (17) and by reproducing the test data from the one of the partitions of the test area (23) by the optical pick-up (5), and

wherein after the test recording processing mechanism (17) determines the optimum recording power of the laser light beam, the erasing mechanism (17) is configured to perform another erase process by emitting a laser light beam of a DC erase power to the one of the partitions of the test area (23) from which the test data is reproduced.

**16.** An optical disk apparatus according to claim 15,

wherein the rewritable optical disk (1) includes an optical disk (1) of a DVD format, and

wherein the optical disk apparatus further comprises a specific information recording mechanism (17) configured to record a pattern including specific information on the one of the partitions of the test area (23) of the optical disk (1) of the DVD format which is subjected to the another erase process performed by the erasing mechanism (17).

FIG. 1

# FIG. 2

DATA AREA 21

PCA 22   PCA 22

DATA AREA 21

TEST AREA 23

COUNT AREA 24

100  99 98 97

3 2 1

100  99 98

4 3 2 1

RECORDING POWER : pw

| 1 | 2 | 3 | 4 | 5 | 6 | 7 | 8 | 9 | 10 | 11 | 12 | 13 | 14 | 15 |

EP 1 498 886 A2

# FIG. 3

START

S1 — REWRITABLE PHASE-CHANGE TYPE OPTICAL DISK ? — NO

YES

S2 — EMIT LASER LIGHT BEAM OF DC ERASE POWER TO TEST AREA

S3 — DETERMINE TEST RECORDING START POSITION OF TEST AREA

S4 — RECORD TEST DATA ON TEST AREA

S5 — REPRODUCE TEST DATA

S6 — CALCULATE OPTIMUM RECORDING POWER

S7 — RECORD DATA ON COUNT AREA

END

# FIG. 4

```
        ┌─────────┐
        │  START  │
        └─────────┘
             │
             ▼
S11 ┌─────────────────────────┐
    │ DETERMINE TEST RECORDING │
    │  START POSITION OF TEST  │
    │          AREA            │
    └─────────────────────────┘
             │
             ▼
S12    ╱─────────────────────╲
      ╱  REWRITABLE PHASE-    ╲      NO
      ╲  CHANGE TYPE OPTICAL  ╱ ──────────┐
       ╲      DISK ?         ╱            │
        ╲──────────────────╱             │
             │ YES                        │
             ▼                            │
S13 ┌─────────────────────────┐          │
    │  EMIT LASER LIGHT BEAM OF │          │
    │    DC ERASE POWER TO      │          │
    │  PARTITION OF TEST AREA   │          │
    └─────────────────────────┘          │
             │ ◄───────────────────────────┘
             ▼
S14 ┌─────────────────────────┐
    │   RECORD TEST DATA ON    │
    │  PARTITION OF TEST AREA  │
    └─────────────────────────┘
             │
             ▼
S15 ┌─────────────────────────┐
    │   REPRODUCE TEST DATA    │
    └─────────────────────────┘
             │
             ▼
S16 ┌─────────────────────────┐
    │    CALCULATE OPTIMUM      │
    │    RECORDING POWER       │
    └─────────────────────────┘
             │
             ▼
S17 ┌─────────────────────────┐
    │   RECORD DATA ON COUNT   │
    │          AREA            │
    └─────────────────────────┘
             │
             ▼
        ┌─────────┐
        │   END   │
        └─────────┘
```

# FIG. 5

```
        START

S21 ──  OBTAIN DATA OF ERASE
        POWER FROM MEMORY

S22 ──  REPRODUCE SIGNAL IN
        COUNT AREA

S23 ──  DETERMINE NON-RECORDED
        PARTITION OF COUNT AREA

S24 ──  DETERMINE NON-RECORDED
        N-th PARTITION OF TEST
        AREA

S25 ──  EMIT LASER LIGHT BEAM OF
        DC ERASE POWER TO N-th
        PARTITION OF TEST AREA

S26 ──  RECORD TEST DATA ON N-th
        PARTITION OF TEST AREA

S27 ──  DETERMINE OPTIMUM
        RECORDING POWER

        END
```

# FIG. 6

EP 1 498 886 A2

$$\text{SYMMETRY OF AC COUPLED RF SIGNAL} : \frac{|\text{PEAK}| - |\text{BOTTOM}|}{|\text{PEAK}| + |\text{BOTTOM}|} \times 100$$

**FIG. 7**

START

S31 — DETERMINE TEST RECORDING START POSITION OF TEST AREA

S32 — REWRITABLE PHASE-CHANGE TYPE OPTICAL DISK ?

NO

YES

S33 — EMIT LASER LIGHT BEAM OF DC ERASE POWER TO PARTITION OF TEST AREA

S34 — RECORD TEST DATA ON PARTITION OF TEST AREA

S35 — REPRODUCE TEST DATA

S36 — CALCULATE OPTIMUM RECORDING POWER

S37 — RECORD DATA ON COUNT AREA

S38 — REWRITABLE PHASE-CHANGE TYPE OPTICAL DISK ?

NO

YES

S39 — EMIT LASER LIGHT BEAM OF DC ERASE POWER TO PARTITION OF TEST AREA

END

# FIG. 8

```
                    ( START )
                        │
                        ▼◄─────────────────┐
S41 ┌─────────────────────────────────┐ NO │
    < DOES OPTICAL DISK HAVE            >───┤
    \ DVD FORMAT ?                     /    │
     └──────────────┬──────────────────┘    │
              YES   │                        │
                    ▼                        │
S42 ┌─────────────────────────────────┐     │
    │ DETERMINE TEST RECORDING        │     │
    │ START POSITION OF TEST          │     │
    │ AREA                            │     │
    └──────────────┬──────────────────┘     │
                   │                         │
                   ▼                         │
S43 ┌─────────────────────────────────┐ NO  │
    < REWRITABLE PHASE-                >───┐ │
    \ CHANGE TYPE OPTICAL             /   │ │
     \ DISK ?                        /    │ │
      └────────────┬────────────────┘     │ │
            YES    │                       │ │
                   ▼                       │ │
S44 ┌─────────────────────────────────┐   │ │
    │ EMIT LASER LIGHT BEAM OF        │   │ │
    │ DC ERASE POWER TO               │   │ │
    │ PARTITION OF TEST AREA          │   │ │
    └──────────────┬──────────────────┘   │ │
                   ▼◄─────────────────────┘ │
S45 ┌─────────────────────────────────┐     │
    │ RECORD TEST DATA ON             │     │
    │ PARTITION OF TEST AREA          │     │
    └──────────────┬──────────────────┘     │
                   │                         │
                   ▼                         │
S46 ┌─────────────────────────────────┐     │
    │ REPRODUCE TEST DATA             │     │
    └──────────────┬──────────────────┘     │
                   │                         │
                   ▼                         │
S47 ┌─────────────────────────────────┐     │
    │ CALCULATE OPTIMUM               │     │
    │ RECORDING POWER                 │     │
    └──────────────┬──────────────────┘     │
                   │                         │
                   ▼                         │
S48 ┌─────────────────────────────────┐ NO  │
    < REWRITABLE PHASE-                >───┐ │
    \ CHANGE TYPE OPTICAL             /   │ │
     \ DISK ?                        /    │ │
      └────────────┬────────────────┘     │ │
            YES    │                       │ │
                   ▼                       │ │
S49 ┌─────────────────────────────────┐   │ │
    │ EMIT LASER LIGHT BEAM OF        │   │ │
    │ DC ERASE POWER TO               │   │ │
    │ PARTITION OF TEST AREA          │   │ │
    └──────────────┬──────────────────┘   │ │
                   ▼◄─────────────────────┘ │
S50 ┌─────────────────────────────────┐     │
    │ RECORD SPECIFIC                 │     │
    │ INFORMATION ON PARTITION        │     │
    │ OF TEST AREA                    │     │
    └──────────────┬──────────────────┘     │
                   │                         │
                   ▼                         │
                ( END )
```

# FIG. 9

START

S61 — OBTAIN DATA OF ERASE POWER FROM MEMORY

S62 — REPRODUCE SIGNAL IN COUNT AREA

S63 — DETERMINE NON-RECORDED PARTITION OF COUNT AREA

S64 — DETERMINE NUMBER OF RECORDED PARTITIONS OF TEST AREA

S65 — 0 < NUMBER OF RECORDED PARTITIONS < 100 ?    YES

NO

S66 — EMIT LASER LIGHT BEAM OF DC ERASE POWER TO ALL PARTITIONS OF TEST AREA

S67 — RECORD TEST DATA ON N-th PARTITION OF TEST AREA

S68 — DETERMINE OPTIMUM RECORDING POWER

END

# FIG. 10A

FIG. 10

| FIG. 10A |
| FIG. 10B |

START

S71 — OBTAIN DATA OF ERASE POWER FROM MEMORY

S72 — ROTATE OPTICAL DISK AT A SPEED EQUAL TO A RO-TATION SPEED OF OPTICAL DISK IN OPC OPERATION

S73 — REPRODUCE SIGNAL IN COUNT AREA

S74 — DETERMINE NON-RECORDED PARTITION OF COUNT AREA

S75 — DETERMINE NUMBER OF RECORDED PARTITIONS OF TEST AREA

Ⓐ

# FIG. 10B

Ⓐ

S76 — ⟨ 0 < NUMBER OF RECORDED PARTITIONS < 100 ? ⟩ YES

NO

S77 — ROTATE OPTICAL DISK AT A PREDETERMINED ERASING SPEED

S78 — EMIT LASER LIGHT BEAM OF DC ERASE POWER TO ALL PARTITIONS OF TEST AREA

S79 — ROTATE OPTICAL DISK AT A SPEED EQUAL TO A RO-TATION SPEED OF OPTICAL DISK IN OPCOPERATION

S80 — RECORD TEST DATA ON N-th PARTITION OF TEST AREA

S81 — DETERMINE OPTIMUM RECORDING POWER

END

# FIG. 11

START

S91 — OBTAIN DATA OF ERASE POWER FROM MEMORY

S92 — SET DEFECT DETERMINATION VALUE RFO

S93 — REPRODUCE SIGNAL IN COUNT AREA

S94 — EXTRACT NON-RECORDED N-th PARTITION OF TEST AREA

S95 — REPRODUCE SIGNAL IN N-th PARTITION AND MEASURE AMPLITUDE OF RF SIGNAL

S96 — AMPLITUDE OF REPRODUCTION SIGNAL < RFO ?

YES

NO

S97 — N = N + 1

S98 — EMIT LASER LIGHT BEAM OF DC ERASE POWER TO N-th PARTITION OF TEST AREA

S99 — RECORD TEST DATA ON N-th PARTITION OF TEST AREA

S100 — DETERMINE OPTIMUM RECORDING POWER

END